# EUROPÄISCHE PATENTSCHRIFT

(11) **EP 2 580 836 B1**
(45) Veröffentlichungstag und Bekanntmachung des Hinweises auf die Patenterteilung: **10.02.2016**
(21) Anmeldenummer: 11722837.9
(22) Anmeldetag: 03.06.2011
(51) Int. Cl.: H02J 3/38, H02J 3/26

(54) **WINDENERGIEANLAGE UND VERFAHREN ZUM BETREIBEN EINER WINDENERGIEANLAGE**
WIND TURBINE AND METHOD FOR OPERATING A WIND TURBINE
ÉOLIENNE ET SON PROCÉDÉ DE FONCTIONNEMENT

(30) Priorität: 08.06.2010 DE 102010023038
(43) Veröffentlichungstag der Anmeldung: 17.04.2013
(73) Patentinhaber: Senvion GmbH, 22297 Hamburg (DE)
(72) Erfinder: FORTMANN, Jens, 13156 Berlin (DE)
(74) Vertreter: Harlfinger, Jan Philipp
(86) Internationale Anmeldenummer: PCT/EP2011/059195
(87) Internationale Veröffentlichungsnummer: WO 2011/154319

(56) Entgegenhaltungen:
- EP-A1- 1 752 660
- WO-A2-2011/128438
- DE-A1-102004 048 341
- DE-A1-102005 049 426
- DE-A1-102007 049 251
- DE-A1-102008 018 748

## Beschreibung

Die Erfindung betrifft eine Windenergieanlage und ein Verfahren zum Betreiben einer Windenergieanlage. Die Windenergieanlage umfasst einen Transformator. Bei dem Verfahren wird mit einem Generator elektrische Energie erzeugt und in mehreren Phasen in ein Stromnetz eingespeist. Die elektrische Energie wird mit einer niedrigen Spannung der Sekundärseite des Transformators zugeführt. Auf der Primärseite des Transformators wird die elektrische Energie mit einer höheren Spannung abgegeben. Das Potential auf der Primärseite des Transformators gegenüber dem Erdpotential ist nicht definiert.

Generatoren von Windenergieanlagen erzeugen elektrische Energie mit einer niedrigen Spannung von beispielsweise 690 Volt. Mit einem zu der Windenergieanlage gehörigen Transformator wird die elektrische Energie auf eine Mittelspannung von beispielsweise 10 kV, 20 kV oder 30 kV gebracht und an ein Mittelspannungsnetz übergeben. Über das Mittelspannungsnetz wird die elektrische Energie an ein Umspannwerk eines Netzbetreibers geleitet und dort für den weiteren Transport auf eine noch höhere Spannung von beispielsweise 400 kV (oder auch 110 kV, 132 kV, 220 kV, 380 kV) umgewandelt. Mit zunehmender Größe der Windparks und Errichtung der Windparks an abgelegenen Orten (z.B. Offshore-Windparks) wird die elektrische Energie über immer größere Strecken im Mittelspannungsnetz übertragen.

Auf der Primärseite des Transformators ist das Potential gegenüber Erde nicht definiert. Die Primärseite selbst ist also nicht oder allenfalls schwach bzw. hochohmig geerdet und ein eventuell vorhandener Erdungspunkt im Mittelspannungsnetz ist so weit entfernt, dass aufgrund von Kapazitäten, Induktivitäten und Widerständen der Leitungen das Potential auf der Primärseite des Transformators von dem Potential am Erdpunkt abweichen kann. Kommt es nun zu einem Fehler im Mittelspannungsnetz (z.B. durch einen Erdschluss), so kann es vorkommen, dass die Information über den Fehler nicht sofort bei der Windenergieanlage ankommt. Die Windenergieanlage würde dann weiter mit voller Leistung elektrische Energie einspeisen, obwohl das Mittelspannungsnetz möglicherweise gar nicht mehr in der Lage ist, die elektrische Energie auf der anderen Seite wieder abzugeben. In einem solchen Fall würden die Kabel im Mittelspannungsnetz innerhalb sehr kurzer Zeit Schaden nehmen. Reparaturen an Kabeln im Mittelspannungsnetz sind aufwändig und teuer.

Der Erfindung liegt ausgehend von diesem Stand der Technik die Aufgabe zu Grunde, eine Windenergieanlage und ein Verfahren zum Betreiben einer Windenergieanlage vorzustellen, mit denen das Risiko von Schäden im Mittelspannungsnetz vermindert wird. Die Aufgabe wird gelöst durch die Merkmale der unabhängigen Ansprüche. Vorteilhafte Ausführungsformen finden sich in den Unteransprüchen.

Erfindungsgemäß wird bei dem Verfahren ein Messwert der Spannung aufgenommen, die zwischen der Primärseite des Transformators und dem Erdpotential anliegt. Der Messwert wird mit einem vorgegebenen Grenzwert verglichen. Die von dem Generator erzeugte elektrische Energie wird angepasst, wenn der Messwert den Grenzwert überschreitet. Aus einer Messung der Spannung zum Erdpotential lassen sich Informationen ermitteln, die mit einer einfachen Messung der Spannung zwischen den Phasen nicht gewonnen werden können.

Zunächst werden einige Begriffe erläutert. Von einem nicht definierten Potential auf der Primärseite des Transformators wird gesprochen, wenn das Netz, das sich dort anschließt überhaupt nicht geerdet ist (also zum Beispiel keinen Sternpunkt hat) oder der Erdungspunkt so weit entfernt ist, dass sich auf der Primärseite des Transformators ein anderes Potential einstellen kann als am Erdungspunkt. Insbesondere in Offshore Windparks sind die Erdungspunkte meist auf den Umspannplattformen, da diese räumlich nicht in den Windenergieanlagen platziert werden können. Zusätzlich sind in Offshore-Windparks die elektrischen Verbindungsleitungen zur Umspannwerkplattform sehr lang, so dass das Potential auf der Primärseite des Transformators nicht definiert ist. Im Normalfall ist die Nullsystemspannung im Mittelspannungsnetz null, daher kann insbesondere von einem nicht definierten Potential gesprochen werden, wenn der elektrische Widerstand der elektrischen Verbindung bis zum Erdungspunkt so groß ist, dass sich bei einem Fehler im Mittelspannungsnetz, insbesondere einem Spannungseinbruch, an der Primärseite des Transformators eine Nullsystemspannung von ungleich null einstellen kann.

Die Erfindung wird an dem Beispiel erläutert, dass sich auf der Primärseite des Transformators ein Mittelspannungsnetz anschließt. An der Sekundärseite des Transformators ist die Windenergieanlage auf einem gegenüber der Primärseite niedrigeren Spannungniveau angeschlossen. Die Verwendung des Begriffs Mittelspannungsnetz dient der Anschaulichkeit. Eine Beschränkung der Erfindung auf einen bestimmten Spannungsbereich ist damit nicht verbunden.

Der Kern der Erfindung besteht darin, auf der Primärseite des Transformators die Spannung gegenüber dem Erdpotential zu messen und aus einer Verschiebung des Potentials Schlüsse für den weiteren Betrieb der Windenergieanlage abzuleiten. Die Erfindung baut auf der Erkenntnis auf, dass es in einem Spannungsnetz Fehler gibt, die sich nicht in erster Linie darin äußern, dass sich die Spannung zwischen den Phasen ändert, sondern darin, dass sich das Potential der Phasen gegenüber einem dritten Punkt verschiebt. Durch eine einfache Messung der Spannung zwischen den Phasen werden solche Fehler nicht oder nicht rechtzeitig erkannt.

Mit der Erfindung wird vorgeschlagen, auf der Primärseite des Transformators die Spannung gegenüber einem dritten Punkt, nämlich dem Erdpotential zu messen. Die betreffenden Fehler können dadurch schneller erkannt werden und die Leistungseinspeisung der Windenergieanlage kann frühzeitig angepasst werden. Durch eine schnelle Reaktion kann es vermieden werden, dass die Kabel des Mittelspannungsnetzes durch übermäßige Leistungseinspeisung überlastet werden und dadurch Schaden nehmen. Die konkreten Maßnahmen, die in der Windenergieanlage ergriffen werden, um die Leistungsabgabe anzupassen, können - wie unten näher ausgeführt wird - je nach Umständen variieren.

Verglichen mit der klassischen Maßnahme, einfach einen Sternpunktbildner auf der Primärseite des Transformators vorzusehen, um ein definiertes Potential gegenüber Erde herzustellen, sind die Kosten erheblich vermindert. Für die Erfindung muss lediglich eine zusätzliche Spannungsmessung auf der Primärseite des Transformators durchgeführt werden und die Steuerung der Windenergieanlage so angepasst werden, dass sie bei Überschreiten bestimmter Grenzwerte in bestimmter Weise reagiert. Im Gegensatz dazu beanspruchen die für einen gesonderten Erdungspunkt erforderlichen Mittelspannungskomponenten in erheblichem Umfang zusätzlichen Bauraum in der Windenergieanlage, der insbesondere bei Offshore-Windenergieanlagen nicht zur Verfügung steht.

Die von der Windenergieanlage erzeugte elektrische Energie wird normalerweise in Form eines Drehstromsystems mit drei Phasen eingespeist. Eine Darstellungsform für ein solches Drehstromsystem ist bekanntlich die Aufspaltung in Mitsystem, Gegensystem und Nullsystem, siehe z.B. P. Kundur "Power Systems Stability and Control" (McGraw-Hill, 1994, Kapitel 13.4). Wenn die Phasen des Drehstromsystems den Phasenwinkel von in diesem Fall 120° einhalten und mit gleicher Spannung belastet sind, liegt im Nullsystem keine Spannung an. Tritt jedoch - z.B. infolge eines Erdschlusses in einer Phase - ein asymmetrischer Belastungszustand auf, so nimmt die Spannung im Nullsystem einen von null verschiedenen Wert an. Der Grenzwert, der im Rahmen des erfindungsgemäßen Verfahrens gesetzt wird, ist vorzugsweise ein Grenzwert für die Spannung im Nullsystem. Wenn die Spannung im Nullsystem einen vorgegebenen Grenzwert überschreitet, wird die Leistungsabgabe der Windenergieanlage angepasst.

Unter Nullsystem oder Nullsystemspannung wird der Wert des aktuellen Potentials aller drei Phasenspannungen im Verhältnis zum Erdpotential verstanden, also der Gleichanteil mit dem die Oszillation einer oder mehrerer Phasen von ihrer Nullachse abweichen. Der mathematische Weg zur Ermittlung der Nullsystemspannung ist unerheblich. Die Nullsystemspannung kann durch Addition der Momentanwerte der einzelnen Phasenspannungen ermittelt werden oder auch durch die in der Literatur beschriebene Überführung der Phasoren der Phasenspannungen mittels komplexer Transformationsmatrizen in einen Nullsystemphasor.

Unter Grenzwert der Nullsystemspannung können je nach Darstellungsform verschiedene Grenzwerte verstanden werden. Der Grenzwert kann den Betrag bzw. die Länge des komplexen Nullsystemphasors betreffen. Alternativ kann ein Grenzwert für die Summe der Momentanspannungen der Phasen gegenüber dem Erdpotential gemeint sein. Möglich ist es ferner, dass der Grenzwert eine einseitige asymmetrische Überspannung der maximalen Spannungsamplitude einer Phase im Rahmen einer Wechselspannungsperiode betrifft. Hier wird die Erfindung anhand einer relativen Definition eines Grenzwertes zum Normalwert der Spannung erläutert. Die Transformation in die jeweils anderen Darstellungsformen kann der einschlägigen Literatur entnommen werden. Sofern mit Bezug auf das Nullsystem von einem Grenzwert gesprochen wird, sind jeweils alle Darstellungsformen gemeint.

Der Messwert auf der Primärseite des Transformators wird vorzugsweise so aufgenommen, dass sich aus ihm die Spannung im Nullsystem ermitteln lässt. Ist auf der Primärseite des Transformators ein Sternpunkt zwischen den Phasen des Drehstromsystems vorgesehen, der nicht geerdet ist, so entspricht die Spannung des Nullsystems der Spannung zwischen dem Sternpunkt und dem Erdpotential. Die Spannung des Nullsystems kann in diesem Fall also direkt gemessen werden. Es kann daher auch vorgesehen sein, mittels hochohmiger Widerstände einen künstlichen Sternpunkt zwischen den Phasen zu bilden und aus einer Messung der Spannung zwischen dem künstlichen Sternpunkt und dem Erdpotential die Spannung im Nullsystem zu ermitteln. Alternativ kann auch für alle Phasen des Drehstromsystems die Spannung gegenüber dem Erdpotential gemessen werden. Die Spannung im Nullsystem ergibt sich dann, indem die Momentanwerte der drei Phasenspannungen addiert werden und durch die Anzahl der Phasen geteilt werden.

Ein erster Grenzwert für die Spannung im Nullsystem kann so gesetzt sein, dass mit dem Überschreiten dieses Grenzwerts der Normalbetrieb der Windenergieanlage verlassen wird. Dieser Grenzwert für die Spannung im Nullsystem kann beispielsweise zwischen 1% und 5% der Nennspannung liegen. Wird der Grenzwert anhand der Spannung zwischen den Phasen und dem Erdpotential ermittelt, so kann der erste Grenzwert beispielsweise so definiert sein, dass die Spannung in einer erste Phase bei 105% der Nennspannung liegt, während die Nennspannung in einer zweiten Phase nicht überschritten wird. Wenn die Spannung diesen ersten Grenzwert überschreitet, wird zwar der Normalbetrieb verlassen, für einen begrenzten Zeitraum kann die Windenergieanlage aber trotzdem in Betrieb bleiben.

Wenn im Mittelspannungsnetz in einer Phase des Drehstromsystems ein Fehler auftritt und sich deswegen eine Spannung im Nullsystem ergibt, so hat dies zur Folge, dass die Spannung in den beiden übrigen Phasen mit der Frequenz des Drehstromsystems ansteigt und abschwillt. Die zulässige Belastung der beiden anderen Phasen wird also periodisch überschritten. Bereits nach kurzer Betriebsdauer in einem solchen Betriebszustand können die Kabel des Mittelspannungsnetzes Schaden nehmen. Die Spannung im Nullsystem kann durch Maßnahmen am Generator der Windenergieanlage nicht direkt beeinflusst werden. Möglich ist es aber, insgesamt die Spannungsamplitude abzusenken. Im Mittelspannungsnetz hat dies zur Folge, dass Spannungsspitzen vermieden werden und die Belastung für die Kabel deswegen sinkt. In einer Ausführungsform des erfindungsgemäßen Verfahrens besteht das Anpassen der von dem Generator erzeugten elektrischen Energie also darin, dass nach dem Überschreiten eines ersten Grenzwerts die Spannungsamplitude vermindert wird. Vorzugsweise wird dazu die Einspeisung von Blindleistung in geeigneter Weise angepasst und insbesondere in erhöhtem Maße induktiver Blindstrom eingespeist. Zusätzlich kann die Einspeisung von Wirkstrom vermindert werden, um die Belastung für die Kabel weiter zu vermindern.

Das Anpassen der von dem Generator erzeugten elektrischen Energie kann sich am Mitsystem bzw. Gegensystem orientieren. Soll die Belastung für alle Phasen des Drehstromsystems symmetrisch gesenkt werden, kann induktiver Blindstrom im Mitsystem eingespeist werden, um spannungssenkend zu wirken. Sollen zusätzlich oder anstattdessen Abweichungen des Phasenwinkels ausgeglichen werden, können geeignete Maßnahmen im Gegensystem ergriffen werden. Insbesondere kann induktiver Blindstrom im Gegensystem eingespeist werden. Die konkret zu ergreifenden Maßnahmen können mit dem Netzbetreiber abgestimmt sein.

Anstatt eines Grenzwerts, der sich auf die Spannung im Nullsystem bezieht, kann auch ein Grenzwert für die Phasenspannung, als errechneter Wert aus Mitsystemspannung, Gegensystemspannung und Nullsystemspannung gesetzt werden. Als erster Grenzwert für den Normalbetrieb, oberhalb dessen die von dem Generator erzeugte elektrische Energie angepasst wird, kann beispielsweise ein Wert von 105% der Nennspannung angesetzt werden.

Bei dem erfindungsgemäßen Verfahren kann alternativ oder zusätzlich zu dem ersten Grenzwert ein zweiter Grenzwert festgelegt werden, nach dessen Überschreiten die Windenergieanlage auch für einen kurzen Zeitraum nicht mehr weiter betrieben werden kann. Bezieht sich der zweite Grenzwert auf die Spannung im Nullsystem kann beispielsweise ein Wert zwischen 10% und 20% der Nennspannung angenommen werden. Bezieht sich der zweite Grenzwert auf die Spannung zwischen den Phasen und dem Erdpotential, so kann als zweiter Grenzwert beispielsweise ein Wert von 110%, 120% oder 130% der Nennspannung in einer ersten Phase angenommen werden, während die Nennspannung in einer anderen Phase nicht überschritten wird.

Ein normales Abschalten der Windenergieanlage zieht sich über einen gewissen Zeitraum hin. Unter bestimmten Umständen kann die im Verlauf des Abschaltens von der Windenergieanlage noch eingespeiste elektrischer Energie ausreichen, um die Kabel im Mittelspannungsnetz zu beschädigen. Es kann deswegen vorgesehen sein, dass nach dem Überschreiten des zweiten Grenzwerts eine Schnellabschaltung durchgeführt wird. Bei der Schnellabschaltung können in einem ersten Schritt die Sollwerte für den Wirkstrom und den Blindstrom auf null gesetzt werden. In einem zweiten Schritt kann ein Trennschalter geöffnet werden, der die Windenergieanlage vom Netz trennt. Mit diesen Maßnahmen wird es bei der Schnellabschaltung möglich, die Leistungsabgabe innerhalb von weniger als 60 ms, vorzugsweise weniger als 30 ms auf null zu reduzieren. Die Leistungsabgabe wird damit deutlich schneller auf null gebracht, als es bislang mit einem einfachen Öffnen des Trennschalters möglich war, das etwa 100 ms dauert. Dies ist deswegen möglich, weil mit der Umrichtertechnik die Leistungsabgabe unterbunden werden kann. Allerdings nimmt man im Gegenzug eine Beschleunigung des Rotors in Kauf.

In einer weiteren Ausführungsform kann nach dem Überschreiten des zweiten Grenzwerts die Spannung im Netz aktiv herabgesetzt werden. Dazu kann die Windenergieanlage Leistung aus dem Netz beziehen, indem der Umrichter (bzw. im Fall einer doppelt gespeisten Asynchronmaschine auch der Generator) Leistung aufnimmt. Die Leistung kann beispielsweise durch Zuschalten eines Widerstands im Zwischenkreis und/oder durch kurzzeitige Leistungsabgabe an den Rotor vernichtet werden.

Mit dem Überschreiten des ersten Grenzwerts verlässt die Windenergieanlage den Normalbetrieb. Sie kann in diesem Betriebszustand nur für einen begrenzten Zeitraum in Betrieb bleiben, ohne dass die Netzinfrastruktur Schaden nimmt. Wenn die Windenergieanlage länger als diesen begrenzten Zeitraum außerhalb des Normalbetriebs gehalten wird, so kann dies als Überschreitung eines zweiten Grenzwerts angesehen werden. Das Überschreiten des so definierten zweiten Grenzwerts kann zum Anlass genommen werden, die Windenergieanlage abzuschalten. Anstatt eines einzelnen zweiten Grenzwerts kann auch eine Kennlinie hinterlegt sein, in dem für verschiedene Zustände (zum Beispiel Spannungen im Nullsystem) festgelegt ist, für welchen Zeitraum diese zugelassen werden sollen. Wird die Kennlinie überschritten, kann genauso verfahren werden wie beim Überschreiten des zweiten Grenzwerts.

Bei einem Fehler, auf den die Windenergieanlage mit dem erfindungsgemäßen Verfahren reagiert, wird regelmäßig nach kurzer Zeit der Trennschalter am Umspannwerk geöffnet und das Mittelspannungsnetz vom übrigen Netz getrennt. Insbesondere wenn die Windenergieanlage gemäß der Erfindung in hohem Maße induktiven Blindstrom einspeist, äußert sich das Öffnen des Trennschalters durch eine schlagartige Spannungsänderung. Das Auftreten einer solchen schlagartigen Spannungsänderung kann deswegen als Kriterium herangezogen werden, die Windenergieanlage abzuschalten. Tritt umgekehrt innerhalb eines vorgegebenen Zeitraums nach Fehlereintritt keine schlagartige Spannungsänderung auf, deutet dies darauf hin, dass der Trennschalter nicht geöffnet wurde und deswegen eine weitere Leistungseinspeisung der Windenergieanlage gewünschst ist. Das Ausbleiben der schlagartigen Spannungsänderung kann folglich als Kriterium genommen werden, die Windenergieanlage nicht abzuschalten. Damit wird der Weiterbetrieb der Windenergieanlage davon abhängig gemacht, ob eine schlagartige Spannungsänderung auftritt. Wenn die Windenergieanlage in Betrieb bleibt, wird sie vorzugsweise in einen Zustand gebracht, den sie trotz des weiterhin bestehenden Fehlers dauerhaft aufrechterhalten kann. Dieser Zustand kann beispielsweise darin bestehen, dass die elektrische Energie möglichst vollständig an die ungestörten Phasen abgegeben wird und dass die Blindleistungseinspeisung an Grenzwerte angepasst wird, die für einen Dauerbetrieb vorgesehen sind.

Die auf der Primärseite des Transformators aufgenommenen Messwerte über die Spannung gegenüber dem Erdpotential können unmittelbar in dem Umrichter verarbeitet werden. Der Vorteil ist eine kurze Reaktionszeit. Alternativ können die Messwerte auch zunächst in einer Steuerung der Windenergieanlage verarbeitet werden, die anschließend Signale an den Umrichter sendet. Zwar verlängert sich dadurch die Reaktionszeit leicht, dafür sind aber komplexere Reaktionen möglich.

Der Messwert auf der Primärseite des Transformators kann kontinuierlich aufgenommen werden oder mit einer geeigneten Frequenz abgetastet werden. Um höherfrequente Störungen auszuschließen, kann auf die berechnete Nullsystemspannung eine Tiefpassfilterung mit einer Grenzfrequenz von beispielsweise 20 Hz angewendet werden.

In einer alternativen Ausführungsform des erfindungsgemäßen Verfahrens wird der auf der Primärseite des Transformators aufgenommene Messwert nicht nur in einer, sondern in mehreren-Windenergieanlagen berücksichtigt, um die von dem Generator erzeugte elektrische Energie anzupassen. Dazu kann vorgesehen sein, dass eine Windenergieanlage ein Signal an andere Windenergieanlagen übermittelt, sobald der auf der Primärseite des Transformators aufgenommene Messwert einen Grenzwert überschritten hat. In einer vorteilhaften Ausführungsform ist diese Windenergieanlage weit entfernt von einem Erdungspunkt, an dem das Mittelspannungsnetz geerdet ist und damit ein definiertes Potential im Vergleich zum Erdpotential hat. Je weiter eine Windenergieanlage vom Erdungspunkt entfernt ist, desto eher ist mit Spannungen im Nullsystem zu rechnen. Statt einer direkten Übermittlung zwischen den Windenergieanlagen kann der Messwert an eine zentrale Steuerung (Parkmaster) des Windparks übermittelt und dort verarbeitet werden. Der Parkmaster kann dann einzelnen Windenergieanlage Vorgaben machen, in welcher Form sie nach der Erkennung eines Fehlers die Leistungsabgabe anpassen sollen.

Die Erfindung betrifft außerdem eine Windenergieanlage, die zum Durchführen des erfindungsgemäßen Verfahrens ausgelegt ist. Die Windenergieanlage umfasst einen Generator zum Erzeugen elektrischer Energie sowie einen Transformator. Der Transformator empfängt auf einer Sekundärseite elektrische Energie von dem Generator und gibt diese auf einer Primärseite mit höherer Spannung wieder ab, wobei das Potential auf der Primärseite des Transformators nicht definiert ist. Mit einem Sensor wird ein Messwert der Spannung aufgenommen, die zwischen der Primärseite des Transformators und dem Erdpotential anliegt. Ein Logikmodul vergleicht den Messwert mit einem vorgegebenen Grenzwert. Mit einer Steuerung, wird die von dem Generator erzeugte elektrische Energie angepasst, wenn der Messwert den Grenzwert überschreitet.

Die erfindungsgemäße Windenergieanlage kann mit weiteren Merkmalen kombiniert werden, die oben mit Bezug auf das erfindungsgemäße Verfahren beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines Windparks;
- Fig. 2:: eine schematische Darstellung eines Mittelspannungsnetzes;
- Fig. 3:: die Ansicht aus Fig. 2 bei einer anderen Ausführungsform der Erfindung;
- Fig. 4:: eine schematische Darstellung einer Windenergieanlage, die zum Durchführen des erfindungsgemäßen Verfahrens ausgelegt ist;
- Fig. 5 und 6:: eine schematische Darstellungen des Spannungsverlaufs in den drei Phasen eines Drehstromsystems;
- Fig. 7:: eine schematische Darstellung eines Offshore-Windparks; und
- Fig. 8:: die Ansicht aus Fig. 2 bei einer anderen Ausführungsform der Erfindung.

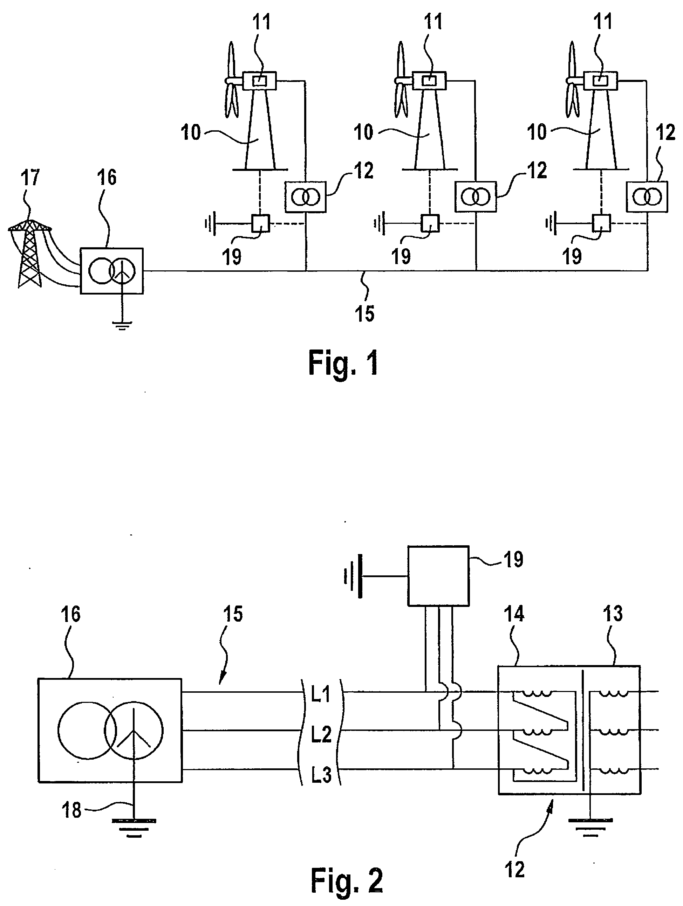

Ein in Fig. 1 gezeigter Windpark umfasst drei Windenergieanlagen 10, die mit einem Generator 11 elektrische Energie erzeugen und diese in ein Netz einspeisen. Der Generator 11 gibt die elektrische Energie als Drehstrom mit einer Spannung von beispielsweise 690 V ab. Die Windenergieanlage 10 umfasst einen Transformator 12, der die von dem Generator 11 zugeführte elektrische Energie auf eine höhere Spannung transformiert, beispielsweise auf eine Mittelspannung von 10 kV. Der Transformator 12 erhält auf einer Sekundärseite 13 elektrische Energie von der Windenergieanlage 10 und gibt diese auf einer Primärseite 14 an ein Mittelspannungsnetz 15 des Windparks ab. Der Windpark umfasst ferner ein Umspannwerk 16, in dem die elektrische Energie vor der Übergabe an ein öffentliches Stromverteilungsnetz 17 auf eine noch höhere Spannung transformiert wird, beispielsweise eine Höchstspannung von 400 kV.

Der Transformator 12 der Windenergieanlage 10 ist, wie Fig. 2 zeigt, ein Transformator in Stern-Dreieck-Schaltung, bei dem der Sternpunkt auf der Sekundärseite 13 geerdet ist, während die Primärseite 14 kein definiertes Potential gegenüber Erde hat. Einen geerdeten Sternpunkt 17 gibt es nur am anderen Ende des Mittelspannungsnetzes 15, nämlich im Umspannwerk 16. Bei der Erdung kann es sich um eine kompensierte Erdung handeln, bei der der Sternpunkt über eine einstellbare Drossel geerdet ist. Mit einer kompensierten Erdung soll der Strom im Fehlerpunkt auf null geregelt werden, so dass der Betrieb trotz eines Fehlers fortgesetzt werden kann. Möglich ist auch eine niederohmige oder strombegrenzte Erdung mit einer Drossel von beispielsweise 20 Ohm bis 30 Ohm. Schließlich ist auch eine harte Erdung mit einem Widerstand von weniger als 1 Ohm möglich.

Das Mittelspannungsnetz 15 kann insbesondere bei großen Windparks eine beträchtliche Ausdehnung haben. Aufgrund der Kapazitäten, Induktivitäten und Widerstände der Kabel des Mittelspannungsnetzes 15 stimmt das Potential auf der Primärseite des Transformators 12 nicht zwangsläufig mit dem Potential des Sternpunkts 18 am anderen Ende des Mittelspannungsnetzes 15 überein. Auf der Primärseite 14 des Transformators 12 ist also das Potential im Sinne der Erfindung nicht definiert. Kommt es nun zu einem Fehler im Mittelspannungsnetz 15, z.B. in Form eines einphasigen Erdschlusses, so kann sich auf der Primärseite 14 des Transformators 12 das Potential gegenüber Erde verändern, ohne dass dies bei einer Messung der Spannung zwischen den Phasen sofort auffällt.

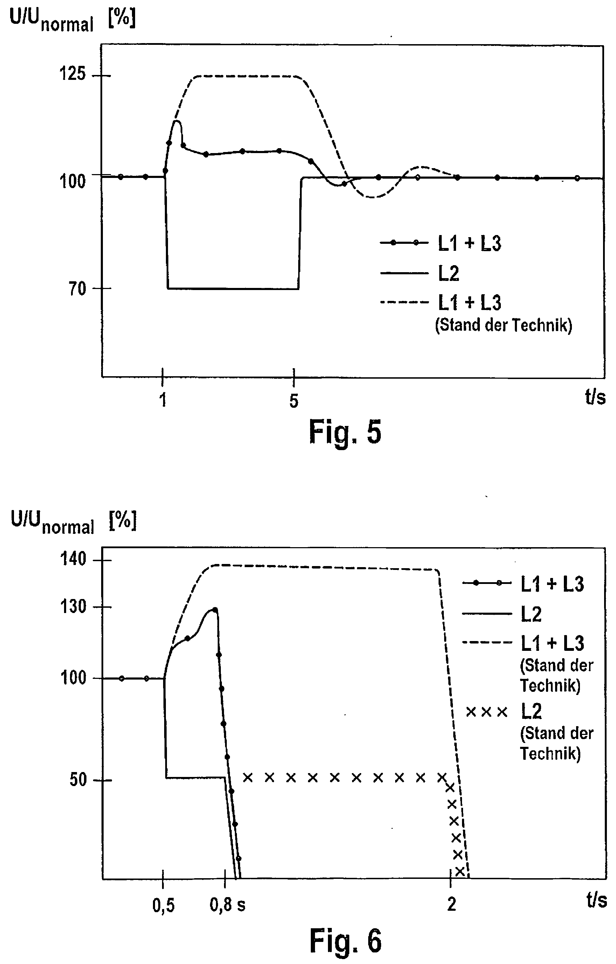

In Fig. 5 ist beispielhaft und in schematischer Form der Spannungsverlauf auf der Primärseite 14 des Transformators 12 in den drei Phasen L1, L2, L3 des Mittelspannungsnetzes 15 gegenüber dem Erdpotential dargestellt. Im Zeitraum zwischen 0 Sekunden und 1 Sekunde befindet sich das Mittelspannungsnetz 15 in seinem normalen Zustand. In allen drei Phasen L1, L2, L3 liegt eine Wechselspannung an, wobei die Spannungsverläufe jeweils um 120° zueinander versetzt sind. Die Momentanspannungen addieren sich zu jedem Zeitpunkt zu null, so dass im Nullsystem keine Spannung anliegt. Die Amplitude der Spannungen U beträgt gerade 100% der Spannung Uₙₒᵣₘₐₗ, die im Normalbetrieb nicht überschritten werden soll.

Nach 1 Sekunde tritt in der Phase L2 ein Fehler auf, durch den die Spannung in der Phase L2 auf einen Wert von 80% der Spannung Uₙₒᵣₘₐₗ (bezogen auf das Erdpotential) einbricht. Der Erdschluss führt dazu, dass die Momentanwerte der Spannungen sich nicht mehr zu null addieren und dass deswegen eine Spannung im Nullsystem anliegt. In den Phasen L1 und L3 steigt die Spannung gegenüber dem Erdpotential nach Fehlereintritt schnell an.

Würde man nur die Spannung der Phasen untereinander messen, so fiele der starke Spannungsanstieg nicht unmittelbar auf. Auch wenn man die Spannungswerte auf der Sekundärseite 13 des Transformators 12 betrachtet, bemerkt man den Fehler nicht unmittelbar. Dies gilt selbst dann, wenn auf der Sekundärseite 13 des Transformators 12 ein geerdeter Sternpunkt vorgesehen ist, weil das Nullsystem nicht durch den Transformator 12 hindurch übertragen wird.

Ohne das erfindungsgemäße Verfahren würde die Spannungsamplitude in den beiden anderen Phasen L1 und L3, wie in Fig. 5 in gestrichelter Linie gezeigt ist, auf einen Wert von beispielsweise 125% (bezogen auf das Erdpotential) ansteigen. Kann der Fehler zum Zeitpunkt t=5s geklärt werden, kehrt die Spannung in der Phase L2 wieder auf den ursprünglichen Wert von 100% zurück und die Spannung in den Phasen L1 und L3 würde sich nach einer kurzen Einschwingphase ebenfalls wieder im Normalbereich einpendeln. Durch die hohe Spannung in den Phasen L1 und L3 besteht die Gefahr, dass die auf Normalspannung ausgelegten Kabel Schaden nehmen.

Mit dem erfindungsgemäßen Verfahren wird die Belastung für die Kabel der Phasen L1 und L3 vermindert. Wenn die Spannung U in den Phasen L1 und L3 gegenüber dem Erdpotential größer wird als 110% der Spannung Uₙₒᵣₘₐₗ, wird dies als Überschreitung des ersten Grenzwerts gewertet und die Leistungsabgabe wird entsprechend angepasst. Die Windenergieanlage speist induktiven Blindstrom in die Phasen L1 und L3 ein und senkt die Spannung in den Phasen auf etwa 105%, wie die mit Punkten gekennzeichnete Linie in Fig. 5 zeigt. Die Spannung liegt damit in einem Bereich, den die Kabel aushalten können. Um die Belastung für die Kabel noch weiter zu senken, kann zusätzlich die Einspeisung von Wirkstrom vermindert werden. Nach dem Ende des Fehlers bei t=5s wird wieder zur normalen Leistungsabgabe zurückgekehrt, so dass schließlich in allen Phasen wieder Normalspannung anliegt.

In dem zweiten schematischen Anschauungsbeispiel der Fig. 6 tritt nach 0,5 Sekunden in der Phase L2 ein Erdschluss im Mittelspannungsnetz 15 zwischen der Windenergieanlage 10 und dem Umspannwerk 16 auf. Am Ort des Erdschlusses, der in der Nähe des Umspannwerks 16 liegt, ist der elektrische Widerstand zwischen der Phase L2 und dem Erdpotential nahe null, so dass die Spannung der Phase L2 an dieser Stelle ebenfalls auf einen Wert nahe null einbricht. Aufgrund des Abstands zum Erdschluss bricht die Spannung an der Primärseite 14 des Transformators 12 jedoch nicht vollständig zusammen, sondern nimmt einen Wert von beispielsweise 50% der Normalspannung an. In den Phasen L1 und L3 steigt die Spannung in der Folge an. Mit dem erfindungsgemäßen Verfahren wird nach kurzer Zeit erkannt, dass die Spannung in den Phasen L1 und L3 den ersten Grenzwert von 110% überschreitet und es wird versucht, die Spannung durch Einspeisen von induktivem Blindstrom zu begrenzen. Es gelingt auch, den Spannungsanstieg zunächst zu begrenzen, siehe die mit Punkten gekennzeichnete Linie in Fig. 6.

In Bruchteilen von Sekunden nach Fehlereintritt wird jedoch im Umspannwerk 16 festgestellt, dass der Fehler schwerwiegend ist. Daraufhin wird im Umspannwerk 16 ein Trennschalter betätigt, der das Mittelspannungsnetz 15 vom Umspannwerk 16 abtrennt. Da nun auf den Phasen L1 und L3 keine Leistung mehr in das Netz abfließen kann, sondern nur noch in den Kurzschluss gespeist wird, steigt die Spannung in den Phasen L1 und L3 trotz der erfindungsgemäßen Gegenmaßnahmen weiter an. Zum Zeitpunkt t=0,8s überschreitet die Spannung in den Phasen L1 und L3 den zweiten Grenzwert von 130%. Nach dem Überschreiten des zweiten Grenzwerts erfolgt eine Schnellabschaltung der Windenergieanlage 10, mit der die Leistungsabgabe innerhalb von 60 ms auf null zurückgefahren wird.

Ohne das erfindungsgemäße Verfahren würde die Spannung in den Phasen L1 und L3 nach Fehlereintritt schnell auf einen Wert von beispielsweise 140% ansteigen. Erst nach einer externen Vorgabe, die hier zum Zeitpunkt t=2s eingeht, würde die Leistungsabgabe der Windenergieanlage 10 reduziert. Bis dahin können die Kabel bereits geschädigt sein.

Mit dem Öffnen des Trennschalters am Umspannwerks geht regelmäßig eine schlagartige Spannungsänderung in den ungestörten Phasen L1 und L3 einher. Eine solche schlagartige Änderung der Spannung kann als weiteres Kriterium für eine sofortige Abschaltung der Windenergieanlage herangezogen werden.

Mit dem erfindungsgemäßen Verfahren wird es darüber hinaus möglich, Windenergieanlagen auch längerfristig mit einem asymmetrisch gestörten Netz weiter zu betreiben. Dies ist insbesondere dann interessant, wenn der Fehler im Mittelspannungsnetz nicht kurzfristig beseitigt werden kann, was z.B bei Offshore-Windparks gelegentlich vorkommen dürfte. Im einfachsten Fall kann mittels Fernwirkleitung ein Signal zum Weiterbetrieb an die Windenergieanlage gesendet werden, so dass die Windenergieanlage unter Beachtung des ersten und zweiten Grenzwerts und/oder von weiteren speziell für den Dauerbetrieb festgelegten Grenzwerten einen Dauerbetrieb aufnimmt. Die Leistung wird dann überwiegend oder ausschließlich in die ungestörten Phasen eingespeist und eine Nullsystemspannung von der Windenergieanlage toleriert.

Wie dargelegt ist das Öffnen des Trennschalters mit einer schlagartigen Spannungsänderung in den ungestörten Phasen verbunden. Umgekehrt zeigt das Ausbleiben einer solchen schlagartigen Spannungsänderung an, dass das Mittelspannungsnetz am Umspannwerk weiterhin verbunden ist. Das Ausbleiben einer schlagartigen Spannungsänderung kann deswegen, wie nachfolgend dargelegt wird, als Kriterium für einen Weiterbetrieb der Windenergieanlage herangezogen werden. Wie anhand der Figuren 5 und 6 beschrieben reagiert die Windenergieanlage bei Vorliegen einer Nullsystemspannung mit dem erfindungsgemäßen Verfahren, um die Nullsystemspannung zu reduzieren. Erwartet wird nun, dass sich in Abhängigkeit von der Tiefe des Spannungseinbruchs der Trennschalter nach einer bestimmten vorgegebenen Zeit öffnet, um die Fehlstelle vom Netz zu trennen. Die Windenergieanlage erkennt dieses bei induktiver Blindstromeinspeisung an einem Spannungssprung in den ungestörten Phasen, z. B. in Form einer sprunghaften Spannungsabsenkung. Bleibt dieser Spannungssprung innerhalb einer vorgebbaren Zeit aus, so ist offensichtlich keine Trennung zum Mittelspannungsnetz gewünscht und die Windenergieanlage nimmt einen Dauerbetrieb am unsymmetrischen Netz auf. Dazu stellt sich die Windenergieanlage so ein, dass die Grenzwerte für den Dauerbetrieb eingehalten werden. Beispielsweise kann die reduzierte Wirkstromeinspeisung wieder erhöht werden und die Blindstromeinspeisung an die Grenzwerte für den Dauerbetrieb angepasst werden.

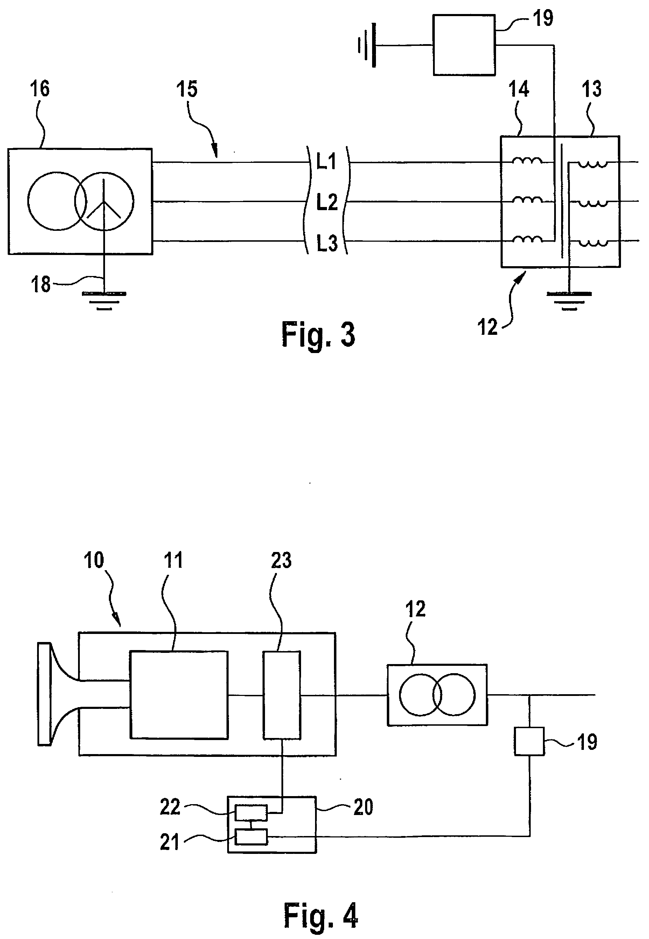

Für die Durchführung des erfindungsgemäßen Verfahrens ist an jeder Windenergieanlage 10 ein Sensor 19 für die Spannung auf der Primärseite 14 des Transformators 12 vorgesehen. Der Sensor 19 hat einen so hohen Widerstand, dass er das Potential auf der Primärseite 14 nicht beeinflusst. Der Sensor 19 greift in der Nähe des Transformators 12 die Spannung aller drei Phasen L1, L2, L3 gegenüber dem Erdpotential ab. Die Messwerte des Sensors 19 werden gemäß Fig. 4 der Steuerung 20 der Windenergieanlage 10 zugeführt. In einem Rechenmodul 21 wird laufend aus den Momentanwerten der Spannung in den Phasen L1, L2, L3 die Spannung U₀ des Nullsystems berechnet. Solange - wie in Fig. 5 vor Fehlereintritt - die Amplitude der Spannungen gleich ist und der Phasenwinkel von 120° eingehalten wird, gibt es keine Spannung im Nullsystem. Nach Fehlereintritt heben sich die Spannungen in der Summe nicht mehr auf und die Spannung im Nullsystem nimmt einen Wert ungleich null an.

Ein Logikmodul 22 in der Steuerung 20 vergleicht laufend die von dem Rechenmodul 21 ermittelte Spannung U₀ im Nullsystem mit einem ersten vorgegebenen Grenzwert und führt damit einen Vergleich zwischen einem auf der Primärseite 14 des Transformators 12 aufgenommenen Messwert und einem Grenzwert durch. Dieser erste Grenzwert wird überschritten, wenn die Spannung im Nullsystem größer ist als 5% der Nennspannung. Solange die Spannung im Nullsystem kleiner ist als 5% der Nennspannung, wird also davon ausgegangen, dass das Mittelspannungsnetz 15 sich im normalen Betriebszustand befindet.

Wenn der erste Grenzwert überschritten ist, gibt die Steuerung 20 einen Befehl an den Umrichter 23 der Windenergieanlage, die Abgabe elektrischer Energie so anzupassen, dass sich die Belastung für das Mittelspannungsnetz 15 reduziert. Der konkrete Befehl kann beispielsweise darin bestehen, in verstärktem Maße induktiven Blindstrom einzuspeisen. Insbesondere kann bei einem asymmetrischen Fehler der Befehl gegeben, induktiven Blindstrom im Gegensystem einzuspeisen. Welche Reaktionen im einzelnen erfolgen soll, kann mit dem Netzbetreiber abgestimmt werden. Mit dem Einspeisen von Blindstrom wird die von dem Generator 11 erzeugte elektrische Energie angepasst. Durch den induktiven Blindstrom wird das Spannungsniveau insgesamt abgesenkt, was am Beispiel der Fig. 5 dazu führen würde, dass in den Phasen L1 und L3 die Spannung nicht bei 125%, sondern beispielsweise bei 105% der Normalspannung Uₙₒᵣₘₐₗ liegt. Einen Spannungswert von 105% können die Kabel der Phasen L1 und L3 aushalten, ohne Schaden zu nehmen.

In Fig. 5 ist der Fall dargestellt, dass der Fehler in der Phase L2 zum Zeitpunkt t=5s behoben werden kann. Wenn es mit dem erfindungsgemäßen Verfahren gelingt, die Spannung im Mittelspannungsnetz innerhalb bestimmter Grenzen zu halten, kann der Betrieb nach dem Ende des Fehlers ohne Beeinträchtigung fortgesetzt werden. In anderen Fällen (siehe Fig. 6) kommt es vor, dass eine schnelle Behebung des Fehlers nicht möglich ist, sondern dass stattdessen am Umspannwerk 16 ein Trennschalter geöffnet wird und damit das Mittelspannungsnetz 15 vom übrigen Netz getrennt wird. Wenn die Windenergieanlage 10 trotz der Trennung weiter volle Leistung einspeist und sei es nur für einen kurzen Zeitraum, so kann dies dazu führen, dass die Kabel des Mittelspannungsnetzes 15 Schaden nehmen.

Auch die Information, dass das Mittelspannungsnetz 15 am Umspannwerk 16 getrennt worden ist, lässt sich auf der Primärseite 14 des Transformators 12 nicht unmittelbar ablesen, wenn man nur die Spannung zwischen den Phasen L1, L2, L3 misst. Auch in diesem Zusammenhang ist die Spannung im Nullsystem aussagekräftiger. Wenn das Mittelspannungsnetz 15 am Umspannwerk 16 getrennt ist und die Windenergieanlagen 10 weiter volle Leistung einspeisen, steigt die Spannung im Nullsystem schnell an. Es kann zunächst versucht werden, durch Einspeisen von induktiven Blindstrom im Mitsystem das Spannungsniveau allgemein abzusenken und zu hoffen, dass der Schalter am Umspannwerk 16 unmittelbar wieder geschlossen wird. Bleibt jedoch das Mittelspannungsnetz 15 vom Umspannwerk 16 getrennt, so überschreitet die Spannung im Nullsystem kurze Zeit, nachdem der erste Grenzwert überschritten worden ist, auch einen zweiten Grenzwert. Nach Überschreiten des zweiten Grenzwerts ist auch ein kurzfristiger Weiterbetrieb nicht mehr möglich. Als zweiter Grenzwert kann beispielsweise eine Spannung im Nullsystem von 50% der Nennspannung angesetzt werden.

Stellt das Logikmodul 22 der Steuerung 20 fest, dass der zweite Grenzwert überschritten ist, so übermittelt die Steuerung 20 einen Abschaltbefehl an die Windenergieanlage. Nach dem Abschaltbefehl führt die Windenergieanlage 10 eine Schnellabschaltung durch. Dazu werden zunächst die die Sollwerte für den Wirkstrom und den Blindstrom auf null gesetzt. Erst anschließend wird ein Trennschalter geöffnet, der die Windenergieanlage 10 vom Netz trennt. Damit wird es möglich, schon innerhalb von 20 ms bis 60 ms nach Erhalt des Abschaltbefehls die Leistungsabgabe auf null zu reduzieren. Dies ist deutlich schneller als es bisher durch einfaches Öffnen eines Trennschalters erreicht werden konnte. Falls erforderlich kann während der Schnellabschaltung Leistung aus dem Netz bezogen werden, um das Netz zusätzlich zu entlasten. Die Leistung kann über einen Widerstand vernichtet werden, der beispielsweise im Zwischenkreis des Umrichters zugeschaltet werden kann. Möglich ist auch eine kurzfristige Leistungsabgabe an den Rotor.

Auch wenn nach dem Verlassen des Normalbetriebs die Spannung im Nullsystem nicht soweit ansteigt, dass eine sofortige Abschaltung der Windenergieanlage 10 erforderlich wird, kann der Betrieb nicht unbegrenzt aufrechterhalten werden. Je näher die Spannung im Nullsystem an den zweiten Grenzwert herankommt, desto kürzer kann der Betrieb aufrechterhalten werden. In der Steuerung 20 der Windenergieanlage 10 kann eine Kennlinie hinterlegt sein, die auszugsweise in der folgenden Tabelle wiedergegeben ist. Überschreitet die Spannung U₀ im Nullsystem den in Spalte 1 wiedergegebenen Bruchteil der Nennspannung Uₙₑₙₙ, so kann der Betrieb für den in Spalte 2 angegebenen Zeitraum T aufrechterhalten werden. Sinkt die Spannung U₀ im Nullsystem innerhalb des Zeitraums T nicht wieder ab, muss die Windenergieanlage 10 abgeschaltet werden. Auch mit dem Überschreiten der Kennlinie wird also ein zweiter Grenzwert überschritten.

| U₀/Uₙₑₙₙ | T |
|---|---|
| 5% | unbegrenzt |
| 10 % | 30 s |
| 20 % | 10 s |
| 40 % | 2 s |
| 50 % | 0 s |

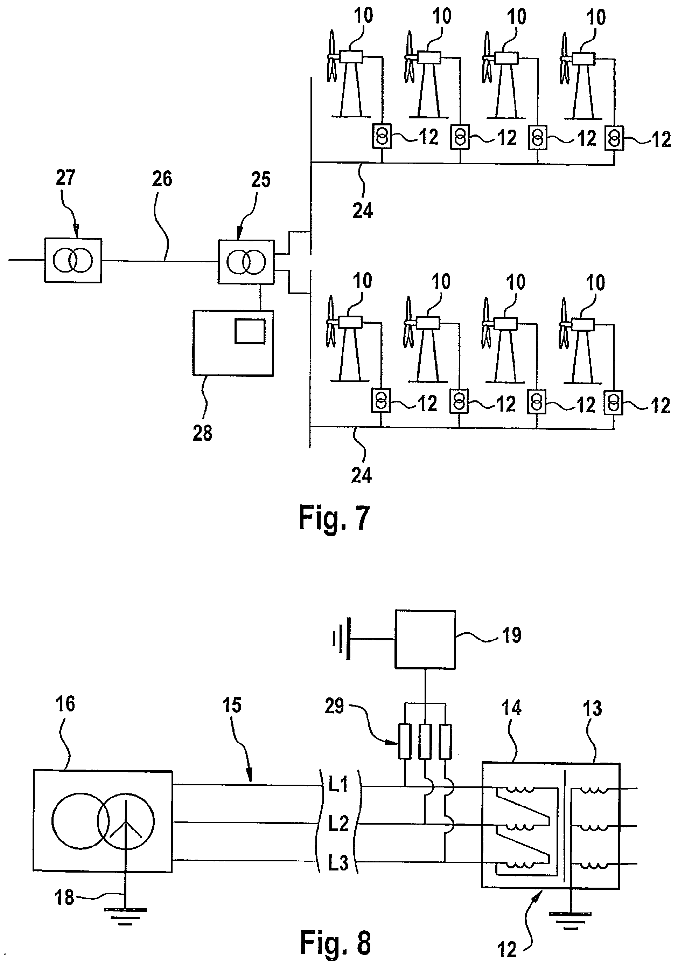

Bei der in Fig. 2 gezeigten Ausführungsform ist die Primärseite 14 des Transformators 12 in Dreieckschaltung geschaltet. Ein Sternpunkt, an dem die Nullsystemspannung direkt abgelesen werden könnte, existiert also nicht. Die Spannungsmessung mit dem Sensor 19 wird deswegen außerhalb des Transformators 12 durchgeführt, jedoch so nahe an dem Transformator 12, dass unmittelbare Rückschlüsse auf die Spannung an der Primärseite 14 möglich sind. Bei einer anderen, in Fig. 3 gezeigten Ausführungsform ist auch die Primärseite 14 des Transformators 12 in Sternschaltung geschaltet. Geerdet ist jedoch auch hier nur der Sternpunkt auf der Sekundärseite 13. An dem Sternpunkt auf der Primärseite 14 kann die Nullsystemspannung des Mittelspannungsnetzes 15 unmittelbar abgelesen werden. Der Sensor 19 greift also an dem Sternpunkt auf der Primärseite 14 an und misst die Spannung gegenüber dem Erdpotential. Der Messwert kann direkt dem Logikmodul 22 zugeführt werden, in dem ein Vergleich mit dem ersten Grenzwert und dem zweiten Grenzwert durchgeführt wird. In noch einer weiteren Ausführungsform, siehe Fig. 8, ist über hochohmige Widerstände 29 ein künstlicher Sternpunkt an der Primärseite 14 des Transformators 12 gebildet. Auch hier kann der Sensor 19, die Nullsystemspannung direkt messen.

In Fig. 7 ist schematisch ein Offshore-Windpark dargestellt, in dem an zwei Strängen jeweils vier Windenergieanlagen 10 angeschlossen sind. Die von den Windenergieanlagen 10 erzeugte elektrische Energie wird mit Transformatoren 12 auf eine Mittelspannung von 10 kV transformiert und über ein windparkinternes Stromnetz 24 zu einem Übergabepunkt 25 geleitet. Dort wird die elektrische Energie mit einem weiteren Transformator an einen Seekabel 26 übergeben, bevor an Land bei 27 die Übergabe an das öffentliche Stromnetz erfolgt. Tritt in einem solchen Windpark ein Fehler (z.B. ein Erdschluss) in einem der Stränge auf, so kann mit dem erfindungsgemäßen Verfahren versucht werden, die Spannung in dem Strang innerhalb akzeptabler Grenzen zu halten, um eine sofortige Trennung des Strangs vom übrigen Netz zu vermeiden. Dazu können wie oben beschrieben die einzelnen Windenergieanlagen 10 Messwerte auf der Primärseite des ihnen zugeordneten Transformators 12 aufnehmen und entsprechend reagieren, wenn die Spannung im Nullsystem erste bzw. zweite Grenzwerte überschreitet.

Alternativ ist es auch möglich, dass die Reaktion mehrerer Windenergieanlagen 10 von den Messwerten abhängt, die bei einer Windenergieanlage 10 aufgenommen werden. Für die Aufnahme der Messwerte wird man eine Windenergieanlage 10 auswählen, bei der mit den höchsten Spannungen im Nullsystem zu rechnen ist. Regelmäßig ist dies die Windenergieanlage, die am weitesten vom Übergabepunkt 25 und damit dem nächsten geerdeten Sternpunkt entfernt ist. Die an dieser entfernten Windenergieanlage 10 aufgenommenen Messwerte können unmittelbar den anderen Windenergieanlage 10 des Strangs zugeleitet werden, so dass diese gemäß der Erfindung reagieren können. Möglich ist es auch, die Messwerte zunächst einem Parkmaster 28 zuzuleiten, der dann zentral entscheidet, welche Windenergieanlage 10 wie zu reagieren hat, und entsprechende Befehle an die Windenergieanlage 10 übermittelt.

## Patentansprüche

1. Verfahren zum Betreiben einer einen Transformator (12) umfassenden Windenergieanlage (10), bei dem mit einem Generator (11) elektrische Energie erzeugt und in mehreren Phasen (L1, L2, L3) in ein Stromnetz (15, 17) eingespeist wird, wobei die elektrische Energie mit einer niedrigen Spannung der Sekundärseite (13) eines Transformators (12) zugeführt wird und auf der Primärseite (14) des Transformators (12) mit einer höheren Spannung abgegeben wird, wobei das Potential auf der Primärseite (14) des Transformators (12) gegenüber dem Erdpotential nicht definiert ist, mit folgenden Schritten:
a. Aufnehmen eines Messwerts der Spannung, die zwischen den Phasen (L1, L2, L3) der Primärseite (14) des Transformators (12) und dem Erdpotential anliegt;
b. Vergleichen des Messwerts mit einem vorgegebenen Grenzwert;
c. Anpassen der von dem Generator (11) erzeugten elektrischen Energie, wenn der Messwert den Grenzwert überschreitet.

2. Verfahren nach Anspruch 1, **dadurch gekennzeichnet, dass** der Grenzwert die Nullsystemspannung (U₀) betrifft.

3. Verfahren nach Anspruch 1, **dadurch gekennzeichnet, dass** der Grenzwert die Spannung zwischen Phase (L1, L2, L3) und Erdpotential betrifft.

4. Verfahren nach einem der Ansprüche 1 bis 3, **dadurch gekennzeichnet, dass** ein erster Grenzwert vorgegeben wird, nach dessen Überschreiten die Windenergieanlage (10) für einen begrenzten Zeitraum (T) in Betrieb bleiben kann, und dass ein zweiter Grenzwert vorgegeben wird, nach dessen Überschreiten die Windenergieanlage (10) abgeschaltet wird.

5. Verfahren nach Anspruch 4, **dadurch gekennzeichnet, dass** als erster Grenzwert für die Nullsystemspannung (U₀) ein Wert zwischen 1% und 5% der Nennspannung (Uₙₑₙₙ) vorgegeben wird.

6. Verfahren nach Anspruch 4 oder 5, **dadurch gekennzeichnet, dass** nach Überschreiten des ersten Grenzwerts, die Spannung der von dem Generator (11) abgegebenen elektrischen Energie vermindert wird.

7. Verfahren nach Anspruch 6, **dadurch gekennzeichnet, dass** nach Überschreiten des ersten Grenzwerts induktiver Blindstrom im Mitsystem und/oder im Gegensystem eingespeist wird.

8. Verfahren nach einem der Ansprüche 4 bis 7, **dadurch gekennzeichnet, dass** nach Überschreiten des zweiten Grenzwerts eine Schnellabschaltung der Windenergieanlage (11) erfolgt.

9. Verfahren nach einem der Ansprüche 4 bis 8, **dadurch gekennzeichnet, dass** die Windenergieanlage (10) nach Überschreiten des zweiten Grenzwerts elektrische Energie aus dem Stromnetz (15) aufnimmt.

10. Verfahren nach einem der Ansprüche 1 bis 9, **dadurch gekennzeichnet, dass** nach Schritt c. der Weiterbetrieb der Windenergieanlage (10) davon abhängig gemacht wird, ob eine schlagartige Spannungsänderung auftritt.

11. Verfahren zum Betreiben einer Mehrzahl von Windenergieanlagen (10), bei dem mit einem Generator (11) elektrische Energie erzeugt und in mehreren Phasen (L1, L2, L3) in ein Stromnetz (15, 17) eingespeist wird, wobei die elektrische Energie mit einer niedrigen Spannung der Sekundärseite (13) eines Transformators (12) zugeführt wird und auf der Primärseite (14) des Transformators (12) mit einer höheren Spannung abgegeben wird, wobei das Potential auf der Primärseite (14) des Transformators (12) gegenüber dem Erdpotential nicht definiert ist, mit folgenden Schritten:
a. Aufnehmen eines Messwerts der Spannung, die zwischen den Phasen der Primärseite (14) des Transformators (12) und dem Erdpotential anliegt;
b. Vergleichen des Messwerts mit einem vorgegebenen Grenzwert;
c. Übermitteln eines Signals an eine Mehrzahl von Windenergieanlagen (10), wenn der Messwert den Grenzwert überschreitet
d. Anpassen der Leistungsabgabe der Mehrzahl von Windenergieanlagen (11).

12. Verfahren nach Anspruch 11, **dadurch gekennzeichnet, dass** der Messwert an einen für die Mehrzahl von Windenergieanlagen (10) zuständigen Parkmaster (28) übermittelt wird und dass der Parkmaster (28) bei Überschreiten des Grenzwerts ein Signal an die Mehrzahl von Windenergieanlagen (10) übermittelt.

13. Windenergieanlage mit einem Generator (11) zum Erzeugen elektrischer Energie, mit einem Transformator (12), der auf einer Sekundärseite (13) elektrische Energie von dem Generator (11) empfängt und diese auf einer Primärseite (14) mit höherer Spannung in mehreren Phasen (L1, L2, L3) wieder abgibt, wobei das Potential auf der Primärseite (14) des Transformators (12) gegenüber dem Erdpotential nicht definiert ist, mit einem Sensor (19) zum Aufnehmen eines Messwerts der Spannung, die zwischen den Phasen (11, L2, L3) der Primärseite (14) des Transformators (12) und dem Erdpotential anliegt, mit einem Logikmodul (22) zum Vergleichen des Messwerts mit einem vorgegebenen Grenzwert, und mit einer Steuerung (20), die die von dem Generator (11) erzeugte elektrische Energie anpasst, wenn der Messwert den Grenzwert überschreitet.

## Claims

1. A method for the operation of a wind turbine (10) comprising a transformer (12), wherein electrical energy is produced by means of a generator (11) and fed into an electrical grid system (15, 17) in a number of phases (L1, L2, L3), whereby the electrical energy is fed to the secondary side (13) of a transformer (12) at a low voltage, and is delivered at a higher voltage on the primary side (14) of the transformer (12), whereby the potential on the primary side (14) of the transformer (12) is undefined in relation to the ground potential, with the following stages:
a. recording of a measured value for the voltage between the phases (L1, L2, L3) on the primary side (14) of the transformer (12) and the ground potential;
b. comparison of the measured value with a predefined limit value;
c. adjustment of the electrical energy produced by the generator (11), if the measured value exceeds the limit value.

2. The method as claimed in claim 1, **characterized in that** the limit value relates to the zero phase-sequence voltage (U₀).

3. The method as claimed in claim 1, **characterized in that** the limit value relates to the voltage between the phases (L1, L2, L3) and the ground potential.

4. The method as claimed in one of claims 1 to 3, **characterized in that** a first limit value is predefined whereby, once this first limit value is exceeded, the wind turbine (10) is able to remain in service for a limited time (T), and **in that** a second limit value is predefined whereby, once this second limit value is exceeded, the wind turbine (10)is shut down.

5. The method as claimed in claim 4, **characterized in that** a value between 1% and 5% of the rated voltage (U_{rated}) is predefined as the first limit value for the zero phase-sequence voltage (U₀).

6. The method as claimed in claim 4 or 5, **characterized in that**, once the first limit value is exceeded, the voltage of the electrical energy delivered by the generator (11) is reduced.

7. The method as claimed in claim 6, **characterized in that**, once the first limit value is exceeded, inductive reactive current is fed in in the positive phase-sequence system and/or in the negative phase-sequence system.

8. The method as claimed in one of claims 4 to 7, **characterized in that**, once the second limit value is exceeded, rapid shutdown of the wind turbine (11) takes place.

9. The method as claimed in one of claims 4 to 8, **characterized in that**, once the second limit value is exceeded, the wind turbine (10) taps electrical energy from the grid system (15).

10. The method as claimed in one of claims 1 to 9, **characterized in that**, after stage c., the continuing operation of the wind turbine (10) is made dependent upon the occurrence of an abrupt voltage variation.

11. A method for the operation of multiple wind turbines (10), wherein electrical energy is produced by means of a generator (11) and fed into a grid system (15, 17) in a number of phases (L1, L2, L3), whereby the electrical energy is fed to the secondary side (13) of a transformer (12) at a low voltage, and is delivered at a higher voltage on the primary side (14) of the transformer (12), whereby the potential on the primary side (14) of the transformer (12) is undefined in relation to the ground potential, with the following stages:
a. recording of a measured value for the voltage between the phases on the primary side (14) of the transformer (12) and the ground potential;
b. comparison of the measured value with a predefined limit value;
c. transmission of a signal to multiple wind turbines (10), if the measured value exceeds the limit value;
d. adjustment of the power output of the multiple wind turbines (11).

12. The method as claimed in claim 11, **characterized in that** the measured value is transmitted to a farm master (28) which governs the multiple wind turbines (10), and **in that** the farm master (28) transmits a signal to the multiple wind turbines (10) when the limit value is exceeded.

13. A wind turbine with a generator (11) for the production of electrical energy, with a transformer (12) which receives electrical energy from the generator (11) on a secondary side (13), and delivers this electrical energy again at a higher voltage in a number of phases (L1, L2, L3) on a primary side (14), whereby the potential on the primary side (14) of the transformer (12) is undefined in relation to the ground potential, with a sensor (19) for the recording of a measured value for the voltage between the phases (L1, L2, L3) on the primary side (14) of the transformer (12) and the ground potential, with a logic module (22) for the comparison of the measured value with a predefined limit value, and with a control system (20) which adjusts the electrical energy produced by the generator (11), if the measured value exceeds the limit value.

## Revendications

1. Procédé de fonctionnement d'une éolienne (10) comprenant un transformateur (12), dans lequel de l'énergie électrique est produite avec un générateur (11) et injectée dans un réseau électrique (15, 17) dans plusieurs phases (L1, L2, L3), l'énergie électrique étant amenée à une basse tension au côté secondaire (13) d'un transformateur (12) et délivrée à une tension supérieure sur le côté primaire (14) du transformateur (12), le potentiel sur le côté primaire (14) du transformateur (12) n'étant pas défini par rapport au potentiel de terre, comprenant les étapes suivantes :
a. réception d'une valeur de mesure de la tension qui se trouve entre les phases (L1, L2, L3) du côté primaire (14) du transformateur (12) et le potentiel de terre ;
b. comparaison de la valeur de mesure avec une valeur limite prédéfinie ;
c. adaptation de l'énergie électrique produite par le générateur (11) si la valeur de mesure dépasse la valeur limite.

2. Procédé selon la revendication 1, **caractérisé en ce que** la valeur limite concerne la tension du système homopolaire (Uo).

3. Procédé selon la revendication 1, **caractérisé en ce que** la valeur limite concerne la tension entre une phase (L1, L2, L3) et le potentiel de terre.

4. Procédé selon l'une des revendications 1 à 3, **caractérisé en ce qu'**une première valeur limite est prédéfinie, après le dépassement de laquelle l'éolienne (10) peut rester en fonctionnement pendant une période limitée (T), et **en ce qu'**une deuxième valeur limite est prédéfinie, après le dépassement de laquelle l'éolienne (10) est arrêtée.

5. Procédé selon la revendication 4, **caractérisé en ce qu'**une valeur comprise entre 1 % et 5 % de la tension nominale (Uₙₑₙₙ) est prédéfinie en tant que première valeur limite pour la tension du système homopolaire (Uo).

6. Procédé selon la revendication 4 ou 5, **caractérisé en ce qu'**après le dépassement de la première valeur limite, la tension de l'énergie électrique délivrée par le générateur (11) est diminuée.

7. Procédé selon la revendication 6, **caractérisé en ce qu'**après le dépassement de la première valeur limite, un courant réactif inductif est injecté dans le système direct et/ou dans le système inverse.

8. Procédé selon l'une des revendications 4 à 7, **caractérisé en ce qu'**après le dépassement de la deuxième valeur limite, un arrêt rapide de l'éolienne (11) est réalisé.

9. Procédé selon l'une des revendications 4 à 8, **caractérisé en ce qu'**après le dépassement de la deuxième valeur limite, l'éolienne (10) reçoit de l'énergie électrique à partir du réseau électrique (15).

10. Procédé selon l'une des revendications 1 à 9, **caractérisé en ce qu'**après l'étape c., la poursuite du fonctionnement de l'éolienne (10) est conditionnée à ce qu'une variation de tension brusque survienne.

11. Procédé de fonctionnement d'une pluralité d'éoliennes (10), dans lequel de l'énergie électrique est produite avec un générateur (11) et injectée dans un réseau électrique (15, 17) dans plusieurs phases (L1, L2, L3), l'énergie électrique étant amenée à une basse tension au côté secondaire (13) d'un transformateur (12) et délivrée à une tension supérieure sur le côté primaire (14) du transformateur (12), le potentiel sur le côté primaire (14) du transformateur (12) n'étant pas défini par rapport au potentiel de terre, comprenant les étapes suivantes :
a. réception d'une valeur de mesure de la tension qui se trouve entre les phases du côté primaire (14) du transformateur (12) et le potentiel de terre ;
b. comparaison de la valeur de mesure avec une valeur limite prédéfinie ;
c. transmission d'un signal à une pluralité d'éoliennes (10) si la valeur de mesure dépasse la valeur limite ;
d. adaptation de la puissance de sortie de la pluralité d'éoliennes (11).

12. Procédé selon la revendication 11, **caractérisé en ce que** la valeur de mesure est transmise à un maître de parc (28) compétent pour la pluralité d'éoliennes (10) et **en ce que** le maître de parc (28) transmet un signal à la pluralité d'éoliennes (10) en cas de dépassement de la valeur limite.

13. Éolienne ayant un générateur (11) pour la production d'énergie électrique, ayant un transformateur (12) qui reçoit sur un côté secondaire (13) de l'énergie électrique provenant du générateur (11) et la délivre ensuite sur un côté primaire (14) avec une tension plus élevée dans plusieurs phases (L1, L2, L3), le potentiel sur le côté primaire (14) du transformateur (12) n'étant pas défini par rapport au potentiel de terre, ayant un capteur (19) pour la détection d'une valeur de mesure de la tension qui se trouve entre les phases (L1, L2, L3) du côté primaire (14) du transformateur (12) et le potentiel de terre, ayant un module logique (22) pour la comparaison de la valeur de mesure avec une valeur limite prédéfinie, et ayant une commande (20) qui adapte l'énergie électrique produite par le générateur (11) si la valeur de mesure dépasse la valeur limite.
